# EUROPÄISCHE PATENTANMELDUNG

(11) **EP 0 647 549 A1**
(43) Veröffentlichungstag der Anmeldung: **12.04.1995**
(21) Anmeldenummer: 93250273.5
(22) Anmeldetag: 08.10.1993
(51) Int. Cl.: B60R 25/00, B60R 25/08

(54) **Anordnung und Verfahren zur Diebstahlsicherung an KFZ mit hydraulischer Bremsanlage**

(71) Anmelder: Reichert, Heiko, 09111 Chemnitz (DE); Gebauer, Theo, D-09120 Chemnitz (DE)
(72) Erfinder: Reichert, Heiko, 09111 Chemnitz (DE); Gebauer, Theo, D-09120 Chemnitz (DE)

(57) **Zusammenfassung**

Anordnung zur Diebstahlsicherung an KFZ, die über ein hydraulisches oder hydropneumatisches Bremssystem (5,6,7) und eine Lenkerverriegelung (20) verfügen, wobei am jeweiligen Hauptbremszylinder (1) nach Auslösen des beschriebenen Mechanismus der mehrfache Betriebsdruck zur Entfaltung und damit die hydromechanische Blockierung sämtlicher Bremsen, Fahrzeugtüren (8) und eine zeitabhängige Auslösung von Betäubungsgaspatronen (10,11) in den Fahrzeuginnenraum zur Wirkung kommen.

## Beschreibung

Die Erfindung betrifft das technische Gebiet der Kraftfahrzeuge, insbesondere solche mit hydraulischer bzw. hydropneumatischer Bremsanlage und dem wirksamen Schutz vor Diebstahl und unbefugter Benutzung nach den Merkmalen des Oberbegriffes der Ansprüche 1 - 10
Allgemein bekannt ist, daß nach derzeitigem Stand der Erkenntnis und der Technik die serienmäßigen Diebstahlsicherungen in KFZ nach folgenden Prinzipien funktionieren:
- mechanische Lenkradsperren (Lenkschloß)
- elektronische Motor,- Bremsen- und Getriebeblockierungen
- mechanische Wegfahrsperren (Getriebe und Motor)
Alle diese Prinzipien sind untereinander kombinierbar, bedeuten aber immer einen finanziellen und technischen Mehraufwand bei nicht 100%iger Gewährleistung des Erfolges.
Zur Diebstahlsicherung mittels Unterbrechung des Bremssystems durch zusätzlich sperrende Rückschlagventile im Hydraulikkreis des KFZ offenbart die Schrift DE 2842 537 (spanisches Patent mit deutscher Nebenanmeldung) einen erheblichen Mehraufwand, da die Rückschlagventile über ein recht aufwendiges Stangensystem gekoppelt mit einem Kombinationsschloß in bzw. außer Funktion gesetzt werden.
Dieses System ist im Nachrüstungsbereich sehr kostenaufwendig und setzt lediglich das Bremssystem außer Kraft, so daß das KFZ immer noch abgeschleppt werden kann.
Eine weitere Schrift DE 40 14 378 offenbart die Absenkung des Reifeninnendruckes auf ein Minimum bei Diebstahlversuch. Dieses System ist ebenfalls mit erheblichen technischem Aufwand verbunden. Des weiteren bedeutet es für den KFZ-Halter einen großen Zeitaufwand, nach mißglücktem Diebstahlversuch, zum Wiederaufpumpen der Reifen. Das Fahrzeug könnte ebenfalls, auch mit abgelassenen Reifen, vorsichtig abgeschleppt werden.
Auf die Offenlegungsschriften, die einzelnen Lenkradschlösser betreffend, soll hier nicht weiter eingegangen werden. Da jeder Fahrzeughersteller ein eigenes System verwendet, die jedoch alle die mechanische Blockierung des Lenksystems zum Ziel haben. Bei den meisten PKW-Typen (vorwiegend alterer Bauart) ist das Aufbrechen dieser Lenkradschlösser mit einem kurzen, ruckartigem Kraftaufwand möglich.

Die Erfindung gemäß Ansprüchen 1 - 10 kann auch nur teilweise angewandt werden in folgenden Varianten:
- Variante I: es werden nur die Bremsen blockiert die Entlüftung erfolgt vom Servicebetrieb
- Variante II: es werden nur die Bremsen blockiert mit Entriegelungsmechanismus und Entlüftungsventil vom Fahrzeuginnenraum aus
- Variante III: Variante II plus Verriegelung aller Fahrzeugtüren und Fenster
- Variante IV: Variante III plus die zeitabhängige Auslösung von ungiftigem Betäubungsgas, so daß der Dieb in jedem Fall gestellt werden kann.
Die technischen Aufwendungen steigen mit steigenden Variantennummern und sind je nach Bedarf bzw. Ansprüchen serienmäßig einzubauen bzw. nachzurüsten.
Da die Auslösung der Druckgaspatrone wahlweise mechanisch, elektrisch, elektronisch etc. erfolgt, kann jeweils die kostengünstigste Variante gewählt werden. (Kombination der Auslösemechanismen möglich)
Beispielsweise ist die Nachrüstung eines älteren KFZ gemäß Variante I recht kostengünstig in Verbindung mit einem serienmäßig bereits vorhandenem Lenkradschloß. Es kann auch bei laufendem Motor nicht bewegt werden, da das ausgelöste Bremssystem jeden auch noch so starken Fahrzeugmotor widersteht.
An einem Ausführungsbeispiel wird die Erfindung und ihre Funktionsweise näher erläutert.

### Ausführungsbeispiel

Ein Unbefugter bricht die Fahrertür oder eine andere eines mit dem erfindungsgemäßen Anordnungen und Vorrichtungen nach Variante IV ausgerüsteten Luxus-KFZ auf.

Er kann das Zündschloß(20) nur manipulieren, wenn wieder alle KFZ-Türen geschlossen sind, denn nur dann gibt die Sicherheitsblende(19) den Schließzylinder des Zündschloßes(20) frei.
Bei gewaltsamer Öffnung der Lenksäule, um Zugang zum Kabelbaum zu erhalten, wird der erfindungsgemäße Mechanismus in Gang gesetzt. Sollte die Fahrertür bei den o.g. Manipulationen noch geöffnet sein, so wird ebenfalls das System in Gang gesetzt. Es besteht die Fluchtmöglichkeit, jedoch kann das Fahrzeug weder durch eigene Kraft oder durch Wegschleppen bewegt werden.
Bei einer geöffneten Tür wird der Zeitmechanismus nicht in Gang gesetzt. Ist der Dieb bei seinen Manipulationen im allseit geschlossenen Fahrzeug ebenfalls nicht erfolgreich (wie zum Beispiel: Überbrücken der Elektronik, behutsames Aufbrechen des Lenkschloßes, Kurzschließen der Zündung etc.), wird erfindungsgemäß der Verriegelungsmechanismus in Gang gesetzt.
Nun bleibt ihm lediglich, die am mechanischen Zeitauslösungsmechanismus(10) voreingestellte Zeitspanne, um das Entlüftungsventil(4) zu betätigen (wie zum Beispiel: Handschuhfach oder ähnliches Versteck aufbrechen, Sicherheitsschloß I(13) aufzubrechen, um die mechanische Verlängerung(17) zu betätigen) und somit die Türen zu entriegeln und den Betäubungsmechanismus zu stoppen.
Die Entlüftung des erfindungsgemäßen Systems kann auch noch an andere Bedingungen (wie zum Beispiel: Eingabe eines Zahlencodes am Bordcomputer, Betätigung eines versteckten Schalters etc.) geknüpft sein.
Somit steht der potentielle Dieb unter Zeitdruck und wird erfahrungsgemäß weitere Fehler beim Versuch der Entlüftung begehen.

Sollte er versuchen die Fahrzeugscheibe(n) einzuschalgen, so erregt er
1. - die Aufmerksamkeit der Umgebung
2. - das KFZ hat Verbundglasscheiben, die nur mit erheblichem Kraftaufwand zu zerstören sind, um eine Flucht aus dem allseits verriegeltem KFZ zu ermöglichen.
Nach Ablauf des Zeitinervalles werden die mit ungiftigem Betäubungsgas gefüllten Patronen(11) gezündet, der Fahrzeuginnenraum(12) wird dann durchströmt, der Dieb wird betäubt. Der KFZ-Halter oder Besitzer braucht nur noch den Dieb im Gewahrsam nehmen zu lassen.

Im Falle der versehentlichen Systemauslösung durch einen zur Benutzung Befugten, bleibt diesem, da er sich mit dem System auskennt und über die nötigen externen Sicherheitsschlüssel, Zahlencodes etc. verfügt, im ablaufenden Zeitintervall genügend Zeit das erfindungsgemäße System zu entlüften und somit zu stoppen.
Das Sicherheitsschloß I(13) dient lediglich zur Sicherheit, des versehentlich durch eigene Bedienungsfehler, eingeschlossenen Benutzungsbefugten.

| Nummern | Bezeichnung |
|---|---|
| 1 | - Hauptbremszylinder/Bremskraftverstärker |
| 2 | - Druckgaspatrone |
| 3 | - Sicherheitsventil |
| 4 | - Entlüftungsventil |
| 5 | - hydraulische Abzweigleitung |
| 6 | - Sicherheitsdurchschlagventil |
| 7 | - hydraulische Ringleitung |
| 8 | - Verriegelungsbolzen |
| 9 | - Fensterhebeblockadebolzen |
| 10 | - hydraulischer Zeitauslöser |
| 11 | - Gaspatrone mit Betäubungsgas |
| 12 | - Fahrzeuginnenraum |
| 13 | - Sicherheitsschloß I |
| 14 | - Fahrsicherung |
| 15 | - massiver Stahlblechkasten |
| 16 | - Motorinnenraum |
| 17 | - mechanische Verlängerung |
| 18 | - Sicherheitsschloß II |
| 19 | - Sicherheitsblende |
| 20 | - Zündschloß |
| 21 | - Rückholfedern |

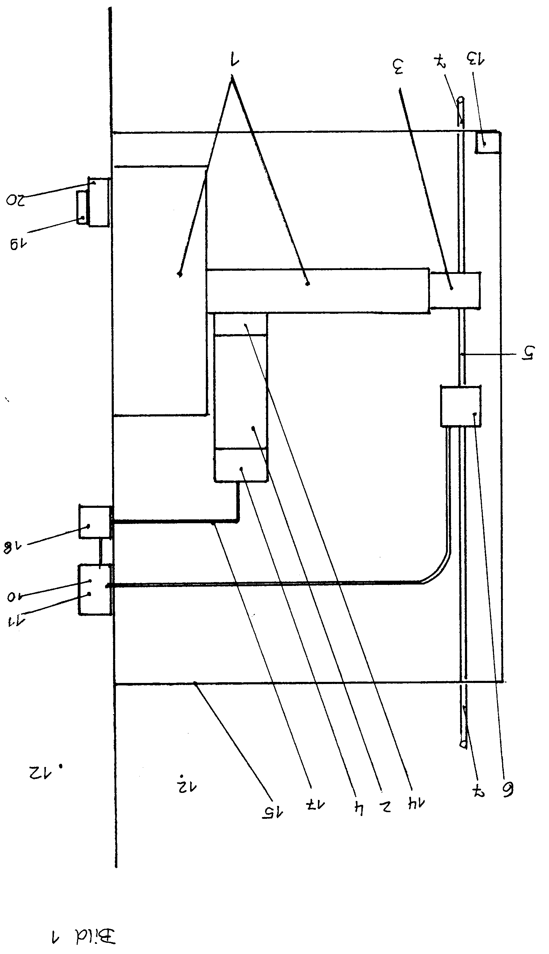

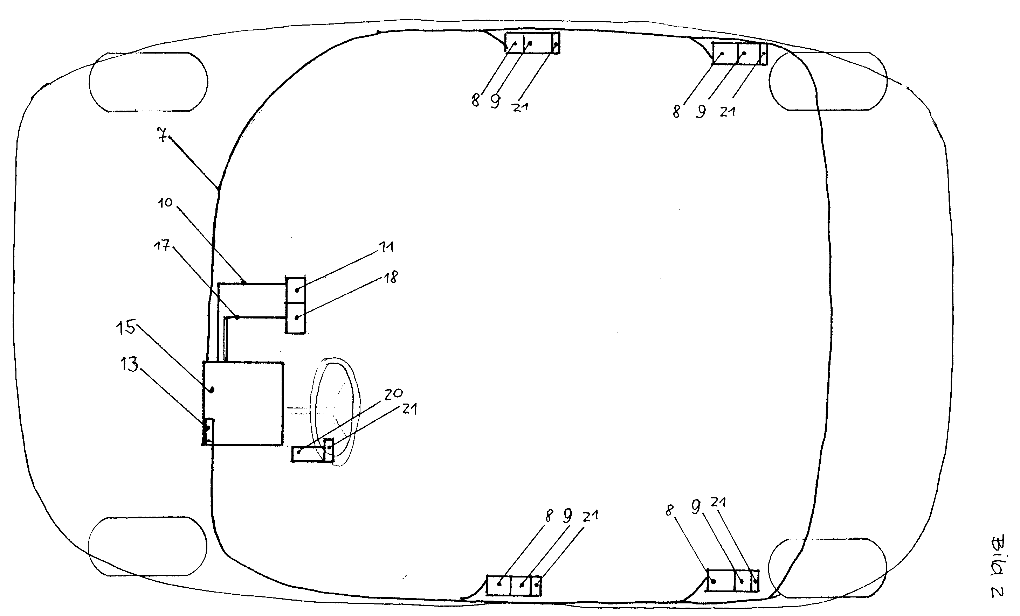

## Patentansprüche

1. Anordnung zur Diebstahlsicherung an KFZ, die über ein hydraulisches oder hydropneumatisches Bremssystem und eine Lenkerverriegelung verfügen, wobei am jeweiligen Hauptbremszylinder nach Auslösen des beschriebenen Mechanismus der mehrfache Betriebsdruck zur Entfaltung und damit die hydraulischmechanische Blockierung sämtlicher Bremsen, Fahrzeugtüren und eine zeitabhängige Auslösung von Betäubungsgaspatronen in dem Fahrzeuginnenraum zur Wirkung kommen, dadurch gekennzeichnet, daß am Hauptbremszylinder bzw. Bremskraftverstärker(1) eine Druckgaspatrone(2) über ein Sicherheitsventil(3) und ein Entlüftungsventil(4) installiert ist, welche auch eine hydraulische Abzweigleitung(5) mit Sicherheitsdurchschlagventil (6) und diese wiederum eine hydraulische Ringleitung(7), welche jeweils externe Verriegelungsbolzen(8) je Fahrzeugtür versorgt, die ihrerseits formschlüssig entsprechende Fensterheberblockadebolzen(9) be tätigen, und mit einem über die hydraulische Ringleitung(7) mechanischen und hydraulischen Zeitauslösungsmechanismus(10), welcher nach Ablauf vorgegebener Zeit, eine oder mehrere mit ungiftigem Betäubungsgas gefüllte Gaspatrone(11) auslöst, die den Fahrzeuginnenraum(12) vollströmen, verbunden ist, und über das Entlüftungsventil(4) ein im Fahrzeugraum installiertes Sicherheitsschloß(13) zu betätigen ist und eine Fahrsicherung(14), welche zwischen Druckgaspatrone(2) und Sicherheitsventil(3) angebracht ist, sowie ein massiver Stahlblechkasten(15), welcher im Motorraum(16) den Hauptbremszylinder(1), die Druckgaspatrone(2), das Sicherheitsventil(3), das Entlüftungsventil(4) sowie einen Teil der hydraulischen Abzweigleitung(5) und die Fahrsicherung(14), aber auch die mechanische Verlängerung(17) des externen Sicherheitsschloßes(13) enthält und ebenfalls über ein gesondertes Sicherschloß(18) zu öffnen ist, und eine elektrisch betriebene Sicherheitsblende(19) über dem Zündschloß(20), welche nur bei geschlossenen Fahrzeugtüren das Zündschloß(20) frei gibt, angebracht sind.

2. Anordnung nach Anspruch 1,
gekennzeichnet dadurch, daß die Druckgaspatrone(2) durch geeignete, vorwiegend mechanische vom Lenkschloß(20) bzw. Zündschloß(20) ausgehende und / oder elektromechanische, elektropneumatische, elektrohydraulische ggf.pyrotechnische Auslösemechanismen betätigt werden.

3. Anordnung nach Anspruch 1,
gekennzeichnet dadurch, daß die hydraulische Abzweigleitung(5) mit Sicherheitsventil(3), Entlüftungsventil(4) sowie Fahrsicherung(14) oberhalb des Hauptbremszylinders so angebracht ist, daß sie beim Auslösen der Druckgaspatrone parallel zum Hauptbremszylinder(1) mit hohem Druck beaufschlagt wird.

4. Anordnung nach Anspruch 1,
gekennzeichnet dadurch, daß Hauptbremszylinder(1) bzw. Bremskraftverstärker, Druckgaspatrone(2), hydraulische Abzweigleitung(5) (teilweise), Sicherheitsventil(3), Entlüftungsventil(4) mit Abführungsröhrchen, Sicherheitsdurchschlagventil(6) und mechanischer Verlängerung(17), das Sicherheitsschloß I(13) sowie der Fahrsicherung(14) in einem massiven Stahlblechkasten(15) untergebracht sind, welcher mit einem Sicherheitsschloß II(18), dessen Schlüssel an keinem anderen Fahrzeugschloß passen darf, versehen ist.

5. Anordnung nach Anspruch 1,
gekennzeichnet dadurch, daß die hydraulische Ringleitung(7) im Fahrzeuginneren (Türen) verläuft und bei Auslösung der Druckgaspatrone(2), die jeweils externen Verriegelungsbolzen(8) (je einer pro Tür) mit hydraulischem Druck versorgt und somit jede Tür unabhängig vom herkömmlichen Türschließsystem verriegelt, sowie gleichzeitig von den externen Verriegelungsbolzen(8) in formschlüssiger Kraftübertragung die Fensterheberblockadebolzen (9) betätigt werden. beide Bolzenarten(8+9) jedoch mit einem Rückholfedersystem(21) versehen sind, welche bei hydraulischer Druckentlastung der Ringleitung(7) sofort wieder die Türen und Fensterheber entriegeln.

6. Anordnung nach Anspruch 1,
gekennzeichnet dadurch, daß das Entlüftungsventil(4) über ein (eventuell im Handschuhfach befindliches) Sicherheitsschloß I(13), welches ebenfalls an keinem anderen Fahrzeugschloß paßt und dazugehörige mechanische Verlängerung(17) oder nach Öffnen des massiven Stahlblechkastens(15) direkt zu betätigen ist und somit der Hauptbremszylinder(1) sowie die hydraulische Abzweig- und Ringleitung(5+7) vom Druck der Druckgaspatrone(2) entlastbar sind.

7. Anordnung nach Anspruch 1,
gekennzeichnet dadurch, daß eine elektrisch betriebens Sicherheitsblende(19), welche das Zündschloß(20) nur zugänglich macht, wenn alle Fahrzeugtüren geschlossen sind, vorhanden ist, und bei gewaltsamer Entfernung ebenfalls die Druckgaspatrone(2) sowie das damit verbundene System auslöst.

8. Anordnung nach Anspruch 1,
gekennzeichnet dadurch, daß ein hydraulischer Zeitauslösungsmechanismus(10) über die hydraulische Ringleitung(7) betrieben, bei Systemauslösung nach Ablauf eines bestimmten voreingestellten Zeitintervalles (ca. 180 Sekunden), die mit ihm verbundene(n) mit ungiftigem Betäubungsgas gefüllte Gaspatrone(n)(11) auslöst und der Fahrzeuginnenraum durchströmt wird. Dieser Zeitmechanismus(10) darf nur in Betrieb gehen, wenn alle Fahrzeugtüren - sowie Fenster - geschlossen und blockiert sind.

9. Anordnung nach Anspruch 1,
gekennzeichnet dadurch, daß eine Fahrsicherung(14), die elektrisch bzw. wahlweise elektromechanisch oder ähnliches betätigt wird, bei regulärem Fahrbetrieb die Verbindung zwischen Druckgaspatrone(2) und Hauptbremszylinder(1) sowie hydraulische Abzweigleitung(5) über das Sicherheitsventil(3) sperrt, so daß eine versehentliche Auslösung des gesamten Systems während des Fahrbetriebes unmöglich ist.

10. Verfahren zur Diebstahlsicherung an KFZ mit hydraulischem Bremssystem, wobei das Bremssystem, ein externes Fenster- und Türverriegelungssystem sowie Betäubungsgaspatroensystem zur Anwendung kommen,
gekennzeichnet dadurch, daß Druckgaspatrone(2) mittels geeigneter Auslösemechanismen, bei Diebstahlversuch, den Hauptbremszylinder(1) sowie ein hydraulisches Abzweig- und Ringleitungssystem(5+6+7) und einen hydraulischen Zeitauslöser für Betäubungsgaspatronen(10+11) mit einem, dem mehrfachen des üblichen Betriebsbremsdruckes entsprechenden Druck beauflagt, so daß ein Unbefugter sich der Gefahr der Betäubung durch ungiftiges Gas im vollständig verriegeltem Fahrzeug aussetzt, und er im Systemauslösungsfall und somit im Ablaufen des Zeitintervalles (ca. 180 Sekunden) zwei externe Schlösser (Handschuhfach- und Sicherheitsschloß(13)) entriegeln muß.
Sollte die Sicherheitsblende(19) bei geöffneten Türen gewaltsam entfernt werden, so ist zwar die Fluchtmöglichkeit gegeben, die Fahrzeugbremsen sind jedoch durch Systemauslösung völlig in Funktion (Räder blockiert), so daß ein Wegfahren bzw. Wegschleppen des Fahrzeuges unmöglich ist.
Löst der Fahrzeugbesitzer bzw. ein Befugter durch Unachtsamkeit versehentlich das System aus, so bleibt ihm unter Verwendung der in seinem Besitz befindlichen externen Schlüssel genügend Zeit das System über das schwer zugängliche (evt.Handschuhfach) im Fahrzeugraum versteckt untergebrachten externen Sicherheitsschloß(13) und der damit verbundenen mechanischen Verlängerung(17) das Entlüftungsventil(4) zu betätigen und somit das KFZ wieder in den betriebsbereiten Zustand zu versetzen und den Betäubungsmechanismus zu stoppen.
Im Fall der versehentlichen Auslösung muß die Druckgaspatrone(2) durch eine neue, noch nicht geöffnete, ersetzt werden. (Austausch im Servicebetrieb)
